# EUROPEAN PATENT SPECIFICATION

(11) **EP 1 153 078 B1**
(45) Date of publication and mention of the grant of the patent: **24.08.2005**
(21) Application number: 99965362.9
(22) Date of filing: 13.12.1999
(51) Int. Cl.: C08L 3/06, C08L 3/08, C08K 5/04, C08K 5/09, C08L 3/02, C08K 5/053

(54) **BIODEGRADABLE POLYMER**
BIOLOGISCH ABBAUBARES POLYMER
POLYMERE BIODEGRADABLE

(30) Priority: 14.12.1998 AU PP769698; 14.12.1998 AU PP769798; 14.12.1998 AU PP770298; 27.07.1999 AU PP184799
(43) Date of publication of application: 14.11.2001
(73) Proprietor: Plantic Technologies Limited, Victoria 3000 (AU)
(72) Inventor: YU, Long, Clayton, VIC 3169 (AU); CHRISTIE, Gregor, Bruce, Yeo, Middle Park, VIC 3026 (AU); COOMBS, Stephen, Brisbane, QLD 4072 (AU)
(74) Representative: Gillam, Francis Cyril
(86) International application number: PCT/AU1999/001101
(87) International publication number: WO 2000/036006

(56) References cited:
- WO-A-92/16583
- WO-A-98/31523
- US-A- 5 316 578
- US-A- 5 322 866
- US-A- 5 393 804
- US-A- 5 444 107
- US-A- 5 449 708
- US-A- 5 691 403
- PATENT ABSTRACTS OF JAPAN vol. 1997, no. 01, 31 January 1997 (1997-01-31) & JP 08 245836 A (CHISSO CORP), 24 September 1996 (1996-09-24)
- PATENT ABSTRACTS OF JAPAN vol. 1997, no. 04, 30 April 1997 (1997-04-30) & JP 08 325447 A (CHISSO CORP), 10 December 1996 (1996-12-10)
- DATABASE WPI Derwent Publications Ltd., London, GB; Class A11, AN 1996-482357 & JP 08 245 836 A (CHISSO CORP) 24 September 1996
- DATABASE WPI Derwent Publications Ltd., London, GB; Class A17, AN 1997-083587 & JP 08 325 447 A (CHISSO CORP) 10 December 1996

## Description

This invention relates to improvements in biodegradable polymeric products particularly starch based polymers.

### Background to the invention

There is an increasing demand for many plastic products used in packaging to be biodegradable. Trays in biscuit and chocolate packages are one example.

Starch films have been proposed as biodegradable alternatives for some time.

USA patent 3949145 proposed a starch/polyvinyl alcohol/glycerol composition for use as a biodegradable agricultural mulch sheet.

Difficulties have been encountered in producing starch based polymers particularly by hot melt extrusion. The molecular structure of the starch is adversely affected by the shear stresses and temperature conditions needed to plasticise the starch and pass it through the extrusion die. For most products foaming has to be avoided and this generally requires attention because of the water content of the starch. Foaming has been avoided by degassing the melt prior to exiting the die as suggested in USA patents 5314754 and 5316578. The latter patent also avoids adding water to the starch. As explained in USA patent 5569692 by not drying starch and avoiding the addition of water the starch can be processed at temperatures between 120°C and 170°C because the water bound to the starch does not generate a vapour pressure such as to require high pressures.

Another approach to improving the melt processability of starch is to provide an additive as in USA patent 5362777 which reduces the melting point of the starch.

The additive is selected from dimethyl sulfoxide, a selection of polyols and amino or amide compounds.

In order to produce starch polymers for particular applications they have been blended with a range of other polymers. Biodegradable blown films are disclosed in USA patent 5322866 which blends raw starch, polyvinyl alcohol and talc with glycerol and water. USA patent 5449708 discloses compositions of starch ethylene acrylic acid and a salt of stearic acid plus a glycerol based lubricant. Flexible and clear transparent sheets are disclosed in USA patent 5374304. These are composed of a high amylose starch and a glycerol plasticizer. The use of starch in conjunction with high amylose or modified starches has also been proposed. USA patents 5314754, and 5316578 both suggest the use of modified starches including hydroxypropyl substituted starches. Hydroxypropylation reportedly increases elongation at break and burst strength and improved resilience in the polymers. Although the efficacy of these special and modified starches is recognised, their cost inhibits the commercial acceptability of the products made from them.

It is an object of this invention to provide a biodegradable polymer which can be processed and thermoformed into sheet and shaped products without difficulty and have acceptable properties for its intended uses.

### Brief Description of the Invention

To this end the present invention provides a process for forming biodegradable polymers which includes the steps of
a) forming a mixture of starch, a modified starch, a water soluble polymer or copolymer containing vinyl alcohol units, up to 20 % of added water or a polyol plasticizer and 0.4 to 1.5 % by weight of a C₁₂₋₂₂ fatty acid or salt,
b) working the mixture and forming a melt within the temperature range of 130°C to 160 °C
c) reducing the temperature and further working the mixture and the extruding the mixture or injecting the mixture into a mould at a temperature of 85 °C to 105 °C without the need to remove water.

The process as defined allows starch based mixtures to be extruded without foaming. The need to vent the extruder to remove water prior to the mix exiting the extrusion die is not needed. Both rigid sheet and flexible starch based films can be made using this process. The foaming temperature of the mix is raised above the temperature at which the melt is most easily plasticised and extruded.

In another aspect, the present invention provides a biodegradable polymer having the composition
a) from 8 to 80% by weight of a starch modified to include an hydroxyalkyl C₂₋₆ group or modfified by reaction with an anhydride of a dicarboxylic acid
b) from 0 to 87.9% of starch
c) from 4 to 11 % by weight of a water soluble polymer selected from polyvinylacetate, polyvinyl alcohol and copolymers of ethylene and vinylalcohol which have a melting point compatible with the molten state of the starch components
d) from 0 to 20% by weight of a polyol plasticiser
e) from 0.1 to 1.5 % by weight of a C₁₂₋₂₂ fatty acid or salt and
f) from 0 to 12 % by weight of added water.

The compositions defined include formulations suitable for forming films or thermoforming rigid products such as packaging trays. The defined compositions are easier to process as they can be extruded in film or sheet form without foaming. The extruded sheet can be thermoformed into shaped trays or containers for use as biodegradable packaging. Usually the need to vent the extruder to remove water prior to the mix exiting the extrusion die is not needed with these formulations.

The upper limit to the content of the modified starch is determined by its cost. This component contributes structural benefits to the resulting material. A preferred component is hydroxypropylated amylose. Other substituents can be hydroxyethyl or hydroxybutyl to form hydroxyether substitutions, or anhydrides such as maleic phthalic or octenyl succinic anhydride can be used to produce ester derivatives. The degree of substitution[the average number of hydroxyl groups in a unit that are substituted] is preferably 0.05 to 2.The preferred starch is a high amylose maize starch. A preferred component is a hydroxypropylated high amylose starch A939 marketed by Goodman Fielder. A preferred concentration range to meet cost parameters for biscuit trays is 12 to 24 %.

The other starch component is any commercially available starch. This may be derived from wheat, maize, potato, rice, oat, arrowroot, and pea sources.

Generally the water content is about 10 to 15 %. A preferred concentration range for starch is 50 to 70.6%

The polymer component c) of the composition is preferably compatible with starch, water soluble, biodegradable and has a low melting point compatible with the processing temperatures for starch. Polyvinyl alcohol and Polyvinylacetate are the preferred polymer. A preferred concentration range for sheet material is 7 to 9%.

The preferred plasticiser is glycerol although ethylene glycol and diethylene glycol are also suitable as is sorbitol. Cost and food contact are important issues in choosing the appropriate plasticizer. For low humidity environments such as biscuit packages it has been found that lower plasticizer content improves the toughness and long term resilience of the material. This is partly due to the properties of the starch ether component and the fact that at low humidity plasticizers such as glycerol tend to remove water from the starch polymer and make it more brittle. It is possible to process the formulation with no plasticizer and the rigid polymer formed is flexible and has good impact resistance at low humidity. When the plasticiser content is low additional water is added to improve processing. Thus the plasticizer content is preferably 0 to 12% and the water content is 12 to 0%. For film processing the plasticizer content is preferably higher than for rigid sheet products.Higher concentrations of plasticiser improve flexibility and for flexible packaging films or mulch films the preferred plasticiser content is 10 to 16%.

The fatty acid or fatty acid salt component is preferably present in concentrations of 0.6 to 1%. Stearic acid is the preferred component. Sodium and potassium salts of stearic acid can also be used. Again cost can be a factor in the choice of this component but lauric, myristic, palmitic, linoleic and behenic acids are all suitable.

It is found that the acid tends to accumulate near to the surface of the composition as it is extruded.

### Detailed description of the invention

Processing conditions depend on the formulations and the desired properties of the product to be produced. The materials need to be heated above 140 °C in the extruder to fully gelatinise the starches. The die temperature needs to be controlled below 110 °C to avoid foaming.

The preferred method of carrying out this invention involves mixing the starch, modified starch, vinylalcohol polymer lubricant and fatty acid components into a free flowing powder. The premixing can be carried out in any conventional mixer. The powder is then introduced into a screw extruder and subjected to an elevated temperature by the shearing action of the screw and the application of external heat to the barrel. The temperature is raised to a maximum in the range of 130°C to 160 °C. Any liquid components including additional water are introduced during this initial phase. The melt that is formed is then propelled toward the die and in moving forward the temperature is reduced to a value in the range of 85 °C to 105°C.

A typical extrusion for rigid products has the following parameters:
Temperature profile °C : 60, 70, 90, 110,130, 145, 130, 120, 110
Screw Speed 120 rpm
Die Pressure 1400 psi
Flexible film can be formed by simply extruding from a sheet forming die and then increasing the speed of the take-off roller to achieve the reduced thickness needed for flexible film. Cooling of the film between the die and the roller is usually needed to ensure that the film does not adhere to the roller. De-humidified air to cool the film also assists in removing excess moisture from the film surface. If the film is formed by the blown tube method dehumidified air is used to blow the film as it exits the die. Talc may also be entrained in the air stream to reduce blocking of the film.

### Examples 1-14

Biscuit trays were made by extruding a sheet and subsequently thermo forming the tray in a hot press. A twin screw extruder was used with a screw speed of 130rpm. The barrel temperature profile was 95 [die], 95 [adapter], 95, 95, 95, 95, 100, 130, 140, 150, 140, 110, 90, 60. The process avoided foaming at the die and did not require venting of the barrel to remove moisture.

The formulations and the initial observations of the trays' performance are given in the table 1.

More detailed tests were carried out on sheets made from examples 9 to 14 and these results are shown in tables 2, 3 & 4.

**TABLE 1**

| **Example** | **A939 [hydroxy propylated amylose]** | **Wheat Starch** | **PVOH** | **Glycerol** | **Stearic Acid** | **Remarks** |
|---|---|---|---|---|---|---|
| 1 * | 37.46 | 37.46 | 8.1 | 14.29 | 0.84 | Includes 4.02% talc no foam, fairly flexible, very strong |
| 2 * | 33.51 | 33.51 | 7.46 | 21.05 | 0.75 | Includes 3.72% CaCO₃ No foam, flexible, weak |
| 3 * | 34.42 | 34.42 | 7.66 | 18.92 | 0.77 | Includes 3.81% CaCO₃ slight foam, flexible, strong |
| 4 * | 35.38 | 35.38 | 7.88 | 16.67 | 0.79 | Includes 3.92% CaCO₃ slight foam, flexible, strong |
| 5 * | 37.34 | 37.34 | 7.87 | 16.67 | 0.78 | no foam, flexible, strong |
| 6 | 38.41 | 38.41 | 8.08 | 14.29 | 0.81 | no foam, flexible, strong |
| 7 * | 39.71 | 39.71 | 8.03 | 11.76 | 0.79 | no foam, flexible, very strong |
| 8 | 38.03 | 38.03 | 7.69 | 11.27 | 0.76 | Includes 4.23% water no foam, flexible, fairly strong |
| 9 * | 81 | 0 | 8 | 10.2 | 0.8 | |
| 10 * | 65 | 16 | 8 | 10.2 | 0.8 | |
| 11 * | 57 | 24 | 8 | 10.2 | 0.8 | |
| 12 * | 24 | 57 | 8 | 10.2 | 0.8 | |
| 13 * | 16 | 65 | 8 | 10.2 | 0.8 | |
| 14 * | 0 | 81 | 8 | 10.2 | 0.8 | |

| | | | | | | |
|---|---|---|---|---|---|---|
| *: not according to the invention | | | | | | |

**Table 2 -**

| **Youngs Modulus** | | | |
|---|---|---|---|
| **example** | **initial** | **24 hours** | **1 week** |
| 9 * | 942.591 | 355.992 | 395.783 |
| 10 * | 743.174 | 611.025 | 459.516 |
| 11 * | 729.490 | 578.648 | 567.977 |
| 12 * | 905.406 | 609.926 | 600.324 |
| 13 * | 1079.915 | 519.888 | 688.400 |
| 14 * | 1155.357 | 797.400 | 749.335 |

| | | | |
|---|---|---|---|
| *: not according to the invention | | | |

**Table 3 -**

| **Stress at 0.2% yield offset** | | | |
|---|---|---|---|
| **C** | **initial** | **24 hours** | **1 week** |
| 9 * | 9.522 | 2.189 | 3.413 |
| 10 * | 6.016 | 4.144 | 3.078 |
| 11 * | 7.313 | 3.823 | 4.102 |
| 12 * | 7.929 | 3.814 | 5.695 |
| 13 * | 12.624 | 5.178 | 6.263 |
| 14 * | 14.175 | 6.884 | 6.565 |

| | | | |
|---|---|---|---|
| *: not according to the invention | | | |

**Table 4 -**

| **% strain at the breaking point** | | | |
|---|---|---|---|
| **C** | **initial** | **24 hours** | **1 week** |
| 9 * | 56.969 | 82,532 | 78.304 |
| 10 * | 49.845 | 43.613 | 41.588 |
| 11 * | 56.550 | 56.166 | 37.591 |
| 12 * | 19.188 | 47.033 | 21.798 |
| 13 * | 17.699 | 40.952 | 21.165 |
| 14 * | 8,552 | 27.661 | 16.145 |

| | | | |
|---|---|---|---|
| *: not according to the invention | | | |

From the above tests and examples and based on cost considerations a suitable formulation for this biscuit tray application is:

| **A939 [hydroxy propylated amylose]** | **Wheat Starch** | **PVOH** | **Glycerol** | **Stearic Acid** |
|---|---|---|---|---|
| 15 * | 65.2 | 8 | 11 | 0.8 |

| | | | | |
|---|---|---|---|---|
| *: not according to the invention | | | | |

The trays are biodegradable and have strength and flexibility properties comparable to the non biodegradable materials currently used. The costs of production are also comparable.

### Examples 15 - 22

The effect of stearic acid content on the composition was tested using a formulation of :

| | |
|---|---|
| Wheat starch | 36% |
| Modified Amylose A939 | 36% |
| Polyvinyl alcohol | 8% |
| Glycerol | 10% |
| Water | 10% |

The mixture was processed at a feed rate of 1.5 a screw speed of 100 rpm and the temperature profile was 70, 90, 100,130, 140, 140, 130, 115, 110, 110, 110[die]

| **Example** | **Stearic acid content [%]** | **Torque [%]** | **Mass [g/min]** | **Quality of Sheet [observation]** |
|---|---|---|---|---|
| 15 * | 0.0 | 57 | 101 | Rough surface |
| 16 | 0.4 | 51 | 100 | Nice sheet |
| 17 | 0.8 | 44 | 106 | Nice sheet |
| 18 | 1.2 | 39 | 114 | Nice sheet |
| 19 * | 2 | 38 | 106 | Sheet with some holes |
| 20 * | 3 | 38 | 106 | Sheet with holes |
| 21 * | 4 | 35 | 101 | Sheet with a lot of holes |
| 22 * | 5 | 34 | 102 | Sheet with a lot of holes |

| | | | | |
|---|---|---|---|---|
| *: not according to the invention | | | | |

The results show that torque is decreased with increase in stearic acid content.

Output mass peaks at a stearic acid content of 1.2 g. the preferred range of stearic acid is 0.4 to 1.5 %.

### Examples 23-26

The following four formulations have also been found suitable for use in forming packaging trays for foodstuffs such as chocolates and biscuits.

| Materials | Example 23 | Example 24 | Example 25 | Example 26 |
|---|---|---|---|---|
| A939 | 39.5 | 39.5 | 79 | 79 |
| Wheat starch | 39.5 | 39.5 | 0 | 0 |
| PVOH | 8 | 8 | 8 | 8 |
| Stearic acid | 1 | 1 | 1 | 1 |
| Glycerol | 6 | 3 | 6 | 3 |
| Water | 8 | 10 | 8 | 10 |

### EXAMPLE 27

Formulations as shown in table 5 were prepared for the purpose of assessing their performance under low and high humidity conditions and to assess the performance of the plasticiser under these conditions.

**Table 5**

| Materials | A939 % | PVOH % | Stearic acid % | Water % | Glycerol % |
|---|---|---|---|---|---|
| A * | 79.5 | 7.95 | 0.8 | 0 | 11.75 |
| B | 78.31 | 7.84 | 0.8 | 4.35 | 8.7 |
| C | 78.31 | 7.84 | 0.8 | 7.25 | 5.8 |
| D | 78.31 | 7.84 | 0.8 | 10.15 | 2.9 |
| E | 79.5 | 7.95 | 0.8 | 11.75 | 0 |

| | | | | | |
|---|---|---|---|---|---|
| *: not according to the invention | | | | | |

Table 6 shows the strength characteristics at 65% RH and table 7 shows the characteristics at 15% RH for these formulations.

**Table 6 -**

| **65%RH** | | | |
|---|---|---|---|
| Formulation | Modulus [Mpa] | Yield S. [Mpa] | Elongation % |
| A * | 547 | 3.2 | 118 |
| B | 774 | 7.1 | 78 |
| C | 1080 | 14 | 65 |
| D | 1556 | 18 | 40 |
| E | 1832 | 27 | 28 |

| | | | |
|---|---|---|---|
| *: not according to the invention | | | |

**Table 7 -**

| **15%RH** | | | |
|---|---|---|---|
| Formulation | Modulus [Mpa] | Yield S. [Mpa] | Elongation % |
| A * | 1750 | 27 | 20 |
| B | 1916 | 33 | 26 |
| C | 2035 | 33 | 23 |
| D | 2447 | 38 | 24 |
| E | 2696 | 41 | 23 |

| | | | |
|---|---|---|---|
| *: not according to the invention | | | |

Tables 6 and 7 show that under high or medium relative humidity Glycerol improves toughness as measured by elongation. Under low relative humidity the glycerol absorbs water from the starch in the polymer and this decreases toughness.

### Example 28

Two formulations were prepared on being formula E of example 27 and the other being the same except that 50 % of the A939 was replaced by wheat starch. Both formulas were processed extruded as sheet and then thermoformed into biscuit trays. The trays were used in a product trial where biscuits were placed in the tray packaged and then stored for three months. The performance and appearance of the trays were acceptable and as good as conventional non - biodegradable trays. The significant advantage of the trays made by both formulations were that disposal was much simpler. Conventional trays are difficult for consumers to compress and their volume cannot be significantly reduced but by simply running these trays under a tap they can be compressed by hand into a small disposable pellet.

From the above description and examples it can be seen that the present invention provides a biodegradable starch polymer that is comparable in price and performance characteristics to conventional non-biodegradable polymers.

Consequently packaging of products such as biscuits and chocolates using a rigid thermoformed tray can be just as presentable and attractive with the added benefit of being environmentally friendly. Similarly packaging of products such as bread, in flexible packaging films, can also be attractive and biodegradable.

## Claims

1. A biodegradable polymer composition comprising:
a) 8 to 80% by weight of a starch modified to include an hydroxyalkyl C₂₋₆ group or modified by reaction with an anhydride of a dicarboxylic acid;
b) 4 to 11% by weight of a water soluble polymer selected from polyvinylacetate and polyvinyl alcohol;
c) added water, present in an amount of up to 12% by weight of the total composition;
d) 0 to 12% by weight of a polyol plasticizer;
e) 0.1 to 1.5% by weight of a C₁₂₋₂₂ fatty acid or salt; and
f) the balance being a natural starch.

2. A composition as claimed in claim 1 wherein component e) is stearic acid.

3. A composition as claimed in claim 1 or claim 2 wherein component b) is polyvinyl alcohol.

4. A composition as claimed in claim 1 wherein the polyol plasticizer is glycerol.

5. A composition as claimed in claim 1 wherein the polyol plasticizer content is zero and the added water content is from 10 to 12%.

6. A process for forming a biodegradable polymer composition as claimed in claim 1, which process includes the steps of:
a) forming a mixture of starch, a modified starch, a water soluble polymer selected from polyvinylacetate and polyvinyl alcohol up to 20% of added water and a polyol plasticizer and 0.4 to 1.5% by weight of a C₁₂₋₂₂ fatty acid or salt;
b) working the mixture and forming a melt within the temperature range of 130°C to 160°C; and
c) reducing the temperature and further working the mixture and then extruding the mixture or injecting the mixture into a mould at a temperature of 85°C to 105°C, without the need to remove water.

7. A process as claimed in claim 6 wherein the polymer is extruded into a sheet and subsequently thermoformed into a packaging tray.

8. A packaging tray having a composition as claimed in claim 1.

9. A packaging film having a composition as claimed in claim 1.

## Patentansprüche

1. Biologisch abbaubare Polymerzusammensetzung, die
a) 8 bis 80 Gew.-% Stärke, die so modifiziert ist, dass sie eine Hydroxyalkyl-C₂₋₆-Gruppe einschließt, oder durch Reaktion mit Dicarbonsäureanhydrid modifiziert ist,
b) 4 bis 11 Gew.-% wasserlösliches Polymer ausgewählt aus Polyvinylacetat und Polyvinylalkohol,
c) zugesetztes Wasser, das in einer Menge bis 12 Gew.-% der Gesamtzusammensetzung vorhanden ist,
d) 0 bis 12 Gew.-% Polyol-Weichmacher und
e) 0,1 bis 1,5 Gew.-% C₁₂₋₂₂-Fettsäure oder -salz umfasst und wobei
f) der Rest natürliche Stärke ist.

2. Zusammensetzung nach Anspruch 1, wobei Komponente e) Stearinsäure ist.

3. Zusammensetzung nach Anspruch 1 oder Anspruch 2, wobei. Komponente b) Polyvinylalkohol ist.

4. Zusammensetzung nach Anspruch 1, wobei der Polyol-Weichmacher Glycerol ist.

5. Zusammensetzung nach Anspruch 1, wobei der Gehalt an Polyol-Weichmacher Null ist und die zugesetzte Menge Wasser 10 bis 12 % beträgt.

6. Verfahren zur Bildung einer biologisch abbaubaren Polymerzusammensetzung gemäß Anspruch 1 mit den Schritten:
a) Bilden einer Mischung von Stärke, modifizierter Stärke, wasserlöslichem Polymer ausgewählt aus Polyvinylacetat und Polyvinylalkohol, bis 20 % zugesetztem Wasser und Polyol-Weichmacher und 0,4 bis 1,5 Gew.-% C₁₂₋₂₂-Fettsäure oder -salz,
b) Bewegen der Mischung und Bilden einer Schmelze im Temperaturbereich von 130 °C bis 160 °C und
c) Verringern der Temperatur und weiteres Bewegen der Mischung und dann Extrudieren der Mischung oder Einspritzen der Mischung in eine Form bei einer Temperatur von 85 °C bis 105 °C, ohne dass Wasser entfernt werden muss.

7. Verfahren nach Anspruch 6, bei dem das Polymer zu einer Lage extrudiert und danach zu einer Verpackungssteige thermogeformt wird.

8. Verpackungssteige mit einer Zusammensetzung gemäß Anspruch 1.

9. Verpackungsfolie mit einer Zusammensetzung gemäß Anspruch 1.

## Revendications

1. Une composition de polymère biodégradable comprenant :
a/ 8 à 80 % en poids d'un amidon modifié pour inclure un groupe hydroxyalkyle en C₂₋₈ ou modifié par réaction avec un anhydride d'un acide dicarboxylique ;
b/ 4 à 11 % en poids d'un polymère soluble dans l'eau choisi parmi un polyvinyleacétate et un alcool polyvinylique
c/ de l'eau ajoutée, présente dans une quantité jusqu'à 12 % en poids du total de la composition ;
d/ 0 à 12 % en poids d'un plastifiant polyol ;
e/ 0,1 à 1,5 % en poids d'un acide gras en C₁₂₋₂₂ ou d'un sel ; et
f/ le reste étant un amidon naturel.

2. Une composition telle que revendiquée dans la revendication 1, dans laquelle le composant e/ est de l'acide stéarique.

3. Une composition telle que revendiquée dans la revendication 1 ou la revendication 2, dans laquelle le composant b/ est de l'alcool polyvinylique.

4. Une composition telle que revendiquée dans la revendication 1, dans laquelle le plastifiant en polyol est du glycérol.

5. Une composition telle que revendiquée dans la revendication 1, dans laquelle la teneur en plastifiant polyol est de zéro et la teneur en eau ajoutée est de 10 à 12 %.

6. Un procédé pour former une composition de polymère biodégradable telle que revendiquée dans la revendication 1, ce procédé comprenant les étapes :
a/ de formation d'un mélange d'amidon, d'amidon modifié, d'un polymère soluble dans l'eau choisi parmi le polyvinylacétate et l'alcool polyvinylique, jusqu'à 20% d'eau ajoutée, un plastifiant polyol et 0,4 à 1,5 % en poids d'un acide gras en C₁₂₋₂₂ et d'un sel ;
b/ de traiter le mélange et de former un masse fondue à une température comprise entre 130 ° C et 160° C ; et
c/ de réduire la température et de traiter de nouveau le mélange puis d'extruder le mélange ou injecter le mélange dans un moule à une température de 85° C à 105 °C sans la nécessité d'enlever l'eau.

7. Un procédé tel que revendiqué dans la revendication 6, dans lequel le polymère est extrudé sous forme d'une feuille et ensuite, thermoformé en forme de sac d'emballage.

8. Un sac d'emballage ayant la composition telle que revendiquée dans la revendication 1,

9. Une feuille d'emballage ayant la composition telle que revendiquée dans la revendication 1.
